# EUROPEAN PATENT APPLICATION

(11) **EP 2 293 611 A1**
(43) Date of publication of application: **09.03.2011**
(21) Application number: 09771955.3
(22) Date of filing: 25.06.2009
(51) Int. Cl.: H04W 12/06, H04W 12/04

(54) **A METHOD, APPARATUS, SYSTEM AND SERVER FOR NETWORK AUTHENTICATION**

(30) Priority: 30.06.2008 CN 200810068193
(71) Applicant: Huawei Technologies Co., Ltd., Longgang District, Shenzhen Guangdong 518129 (CN)
(72) Inventor: GONG, Xiaoyu, Longgang District 518129, Shenzhen (CN); LI, Hongguang, Longgang District 518129, Shenzhen (CN)
(74) Representative: Kreuz, Georg Maria
(86) International application number: PCT/CN2009/072447
(87) International publication number: WO 2010/000185

(57) **Abstract**

A method, a device, a system and a server for network authentication are provided. The method includes: receiving a user authentication request forwarded by a second Access Management Functional Entity, AM-FE, when a user is attached to the second AM-FE from a first AM-FE; obtaining an authentication key of a security domain of the second AM-FE according to the user authentication request; and authenticating the user by using the authentication key. The following problems are solved: packets of user services are lost and even services are temporarily interrupted because of long time consumption and poor security during intra-domain or inter-domain handover of the user. Therefore, the safe authentication of the user's intra-domain or inter-domain roaming is achieved, and thus the security and reliability of user authentication are improved.

## Description

The application claims the benefit of priority to Chinese Patent Application No. 200810068193.9, filed on June 30, 2008, and entitled "METHOD, APPARATUS, SYSTEM AND SERVER FOR NETWORK AUTHENTICATION", which is incorporated herein by reference in its entirety.

### FIELD OF THE INVENTION

The present invention relates to the network technology in the field of communications, and more particularly to a method, a device, a system and a server for network authentication.

### BACKGROUND OF THE INVENTION

Currently, in the network structure of the Next Generation Network (NGN), the integration of fixed and mobile networks is emphasized. Based on the integrated network, when a user is handed over to a new network attachment point, it is necessary to perform the security authentication in view of the security. Only after passing the security authentication, can a user be admitted by the network, and at the same time, sub-keys are generated between the user and the network to protect subsequent information exchanges between the user and the network. Therefore, when a user moves between different network attachment points, it is extremely necessary to provide the user with better service experience as well as fast and short time-delay seamless handovers.

For a mobile user, there are two types of authentication needs. One is network access service authentication need; the other is mobility service authentication need. For the network access service authentication, corresponding standards have been specified in International Telecommunication Union (ITU) and Telecommunications and Internet Converged Services and Protocols for Advanced Networking (TISAPAN), which are referred to as the Network Attachment Control Functions (NACF). They stipulate the required authentication before a user accesses a network, such as the processes of setting a user's IP address and releasing other network configuration parameters to user equipment (UE). Mobility service authentication is also referred to mobility authentication. Only the user having passed the mobility authentication can roam and hand over between networks. According to the implementation modes of the preceding two types of authentication, they can be divided into the integrated mode and the independent mode. The independent mode means that the network access service authentication and the mobility service authentication are independent of each other, and the two types of authentication use different authentication systems to authenticate independently, and thus do not affect each other. The network access service authentication is implemented by the existing network attachment functions such as ITU Y.NACF and TISPAN NASS. However, the mobility service authentication is implemented by other independent authentication functions. In the integrated mode, for a mobility user, a set of authentication system is used once to complete the network access service authentication and the mobility service authentication at the same time. Once a user passes the authentication, it is deemed that both the network access service authentication and the mobility service authentication are passed, and the user can access to the network, and roam between the networks. The authentication in the target handover network of the user during the roaming is a network access service authentication for the target network, so the two are somehow interrelated, and thus the authentication based on the integrated mode is easier to be accepted.

The prior art has at least the following problems:
The authentication process requires several interactions between a user to be authenticated and the authentication functional entities on the network side before the authentication process is completed. Particularly in the mobility scenarios, a user needs to hand over in homogeneous or even heterogeneous access networks. If the entire complex authentication process is required at each time, the intra-domain and inter-domain handovers of a user are extremely time consuming and of poor security, which causes packet loss of user services or even temporary service interruption. Therefore, user's experience is affected.

### SUMMARY OF THE INVENTION

The embodiments of the present invention provides a method, a device, a system and a server for network authentication, to solve the problems of long time consumption and poor security during the intra-domain and inter-domain handovers of a user.

To achieve the above objectives, embodiments of the present invention provides the following technical solutions.

The present invention provides a method for network authentication. When a user is attached from a first Access Management Functional Entity (AM-FE) to a second AM-FE, the method includes: receiving a user authentication request forwarded by the second AM-FE; obtaining an authentication key of a security domain of the second AM-FE according to the user authentication request; and authenticating the user by using the authentication key of the security domain of the second AM-FE.

The present invention provides a system for network authentication. The system includes an AM-FE and a Transport Authentication and Authorization Functional Entity (TAA-FE) proxy. The AM-FE is configured to exchange information with the TAA-FE proxy, and send a user authentication request to the TAA-FE proxy. The TAA-FE proxy is configured to obtain an authentication key of a user-attached security domain according to the user authentication request, and authenticate the user by using the authentication key of the user-attached security domain.

The present invention provides a TAA-FE proxy device. The device includes a storage unit, a processing unit, and an authentication unit. The storage unit is configured to store an authentication key of a security domain of an AM-FE. The processing unit is configured to derive a key for information exchanges between other AM-FEs of the security domain and a user according to the authentication key stored by the storage unit, and send the derived key to the authentication unit. The authentication unit is configured to authenticate the user by using the derived key sent by the processing unit.

The present invention provides a server for network authentication. The server includes a request-receiving unit, and a request-responding unit. The request-receiving unit is configured to receive a user authentication request. The request-responding unit is configured to respond to the user authentication request, and send a response message to a TAA-FE proxy. The response message includes a user-attachment authentication result, a user-attachment root authentication key, and an authentication key of a security domain of an AM-FE. The authentication key of the security domain is derived according to the user-attachment root authentication key as well as an ID and domain name information of the security domain.

The embodiments of the present invention can solve the problem in the prior art that: packets of user services are lost or even services are temporarily interrupted because of long time consumption and poor security during intra-domain and inter-domain handovers of a user. Therefore, the security authentication of the user's intra-domain and inter-domain roaming is achieved, and thus the security and reliability of user authentication are improved.

### BRIEF DESCRIPTION OF THE DRAWINGS

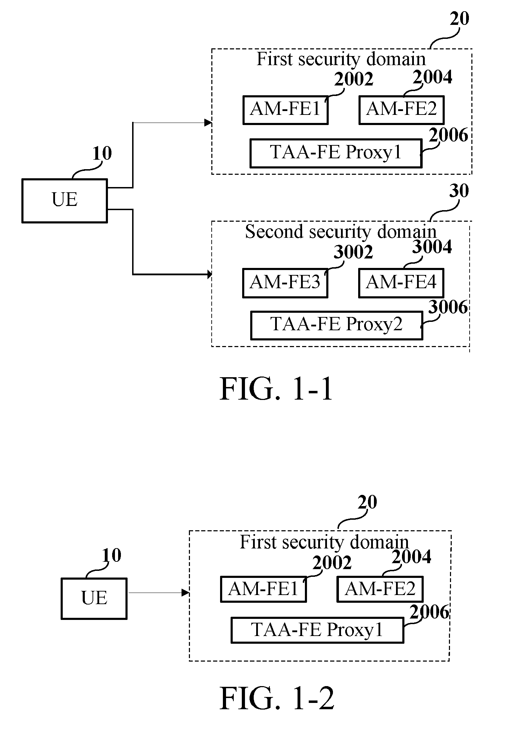

FIG. 1-1 is a schematic diagram of inter-security domain networking according to an embodiment of the present invention;
FIG. 1-2 is a schematic diagram of intra-security domain networking according to an embodiment of the present invention;
FIG. 2 is a flow chart of an inter-security domain network authentication method according to an embodiment of the present invention;
FIG. 3 is a flow chart of an intra-security domain network authentication method according to an embodiment of the present invention;
FIG. 4 is a structural view of a network authentication system according to an embodiment of the present invention;
FIG. 5 is a structural view of a TAA-FE proxy device according to an embodiment of the present invention; and
FIG. 6 is a structural view of the configuration of a network authentication server according to an embodiment of the present invention.

### DETAILED DESCRIPTION OF THE EMBODIMENTS

To make the technical solution, objectives and merits of the present invention clearer, the following describes the embodiments of the present invention in detail with reference to the accompanying drawings.

The embodiment of the present invention provides a method for network authentication. When a user is attached from an AM-FE to a second AM-FE, the method includes: receiving a user authentication request forwarded by the second AM-FE; obtaining an authentication key of a security domain of the second AM-FE according to the user authentication request; and authenticating the user by using the authentication key of the security domain of the second AM-FE. The authentication request comprises: user's complete authentication at the first access to a security domain and user's re-authentication in the security domain. Whether authentication key of the security domain of the second AM-FE is different depends on whether the first AM-FE and the second AM-FE belong to the same security domain.

The application scenario of the embodiment of the present invention is as follows: a user's service subscription zone is in a home network, and the mobility-service-related information of the user is stored in the home network, when the user roams to a visited network, the intra-domain and cross-domain (that is, inter-domain) handovers are performed in the visited network.

The mobility-service-related information of the user includes configuration information, the shared key (that is, the original session agreement key), mobility service configuration parameters. The security domain (also referred to as "the access management domain") of the visited network is divided based on each domain and according to the only one group of management entity components. The management entity group includes a combination of one or more members of the Mobility Management Control Functions (MMCF), the TAA-FE, and the AM-FE.

The details are described in the following with reference to the accompanying drawings.

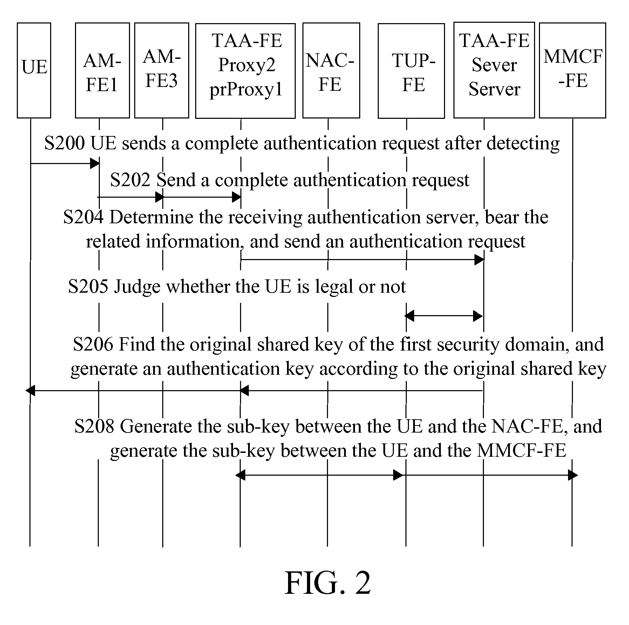

FIG. 1-1 shows a schematic diagram of inter-security domain networking, FIG. 2 shows a flow chart of an inter-security domain network authentication method, and the details of the embodiment of the present invention are described as below.

FIG. 1-1 is a schematic diagram of networking of attaching a user 10 from a first security domain 20 to a second security domain 30. The user 10 moves from an AM-FE 2002 (AM-FE1) of the first security domain 20 where the user is, to an AM-FE 3002 (AM-FE3) of the second security domain 30. A TAA-FE Proxy 3006 (TAA-FE Proxy2) of the second security domain 30 determines the authentication key of the second security domain according to the security complete authentication request sent by the user, and completely authenticates the user by using the authentication key of the second security domain,. In combination of FIG. 2, a network authentication method is further described in detail.

In step S200, a user (UE) sends a complete authentication request.

Before the inter-domain authentication of the user, it should be judged whether the attachment points (AM-FE1 and AM-FE3) are in the same security domain. The specific steps for judging are described as follows.

The user initials the layer 2 link scanning to the periphery, finds a peripheral Access

Point (AP), and obtains the ID of the peripheral AP or the ID of the Base Station (BS). The user, carrying ID information of an alternative or a target AP, sends a query request to the present network where the user locates, and obtains access domain information of the domain of the alternative or target AP, that is, information of the AM-FE3 in the embodiment of the present invention. According to the query result, if the user finds that the AM-FE1 and the AM-FE3 are in different security domains, the user sends a complete authentication request; and if the AM-FE1 and the AM-FE3 are in the same security domain, the user sends a re-authentication request. In the flow chart of FIG. 2 of the embodiment of the present invention, the AM-FE1 and the AM-FE3 are in different security domains, that is, it is a scenario of inter-domain handover authentication, and a complete authentication request is sent. The user is a mobile user, such as a mobile phone terminal. The complete authentication request is a Pre-Authentication. The authentication request includes a user name, a password, user's initial gating information, home domain information, a user ID, and the like.

In step S202, the AM-FE1 sends the complete authentication request to the AM-FE3, and the AM-FE3 forwards the request to the TAA-FE Proxy2.

In step S204, the TAA-FE Proxy2 bears the related user information in the authentication request, judges and sends the complete authentication request to a TAA-FE server for security authentication.

The authentication server (the TAA-FE server) locates in the home network, and the TAA-FE Proxy2 locates in the second security domain of the visited network. Therefore, according to the received home network information in the complete authentication request information, the TAA-FE Proxy2 sends the complete authentication request to the TAA-FE server in the home network and bears in the complete authentication request the related user information, such as the domain name or domain ID of the AM-FE3.

The authentication request includes one or more random combinations of ID or domain name information of the user-attached security domain, and the authentication request may also include the user negotiated SEQ information.

In step S205, the TAA-FE server, according to the authentication request, exchanges information with a transport user profile functional entity (TUP-FE) in the first security domain, and judges whether the user is a legal one.

Specifically, according to the authentication request, the authentication server exchanges information with the TUP-FE in the first security domain, and obtains the mobility configuration information of the TUP-FE in the first security domain. According to the mobility configuration information, and through challenging the auto-negotiation, as well as the original shared key, the authentication server authenticates the user ID information and judges whether the user is a legal one.

The TUP-FE stores the user's mobility configuration information. The mobility configuration information includes one or more of a transport user ID, a supported authentication method list, a key, mobile user's network configuration information (such as IP address), maximum access bandwidth, and network handover strategies.

In step S206, according to the user information carried by the security authentication request, as well as the domain ID and the domain name of the security domain of the AM-FE3, the TAA-FE server generates the user-attachment root key information, derives an authentication key (DSRK) of the security domain, stores the authentication key of the present domain, and at the same time returns the authentication key of the security domain to the TAA-FE Proxy2.

Specifically, according to the user information carried by the security authentication request, as well as the domain ID and the domain name of the security domain of the AM-FE3, the TAA-FE server generates an authentication key (DSRK) of the security domain of the AM-FE3, and sends the authentication key to the TAA-FE Proxy2 in the second security domain. Because the TAA-FE Proxy2 hierarchically generates the authentication keys between the user and other functional entities in the security domain, it is convenient for the system to manage and store the authentication key information of the security domain in a unified way.

In step S208, the TAA-FE Proxy2 authenticates the user according to the authentication key returned by the authentication server.

TAA-FE Proxy2 receives and stores the authentication key (DSRK) of the present security domain. And at the same time, according to the authentication key (DSRK), TAA-FE Proxy2 negotiates with the user, generates the sub-keys between the user and other functional entities in the second security domain. The TAA-FE Proxy2 assigns the corresponding sub-keys to the corresponding functional entities, that is, according to the received authentication key (DSRK) of the present domain, the TAA-FE Proxy2 generates the sub-key between the user and the Network Address Configuration Functional Entity (NAC-FE) and the sub-key between the user and the MMCF. At the same time, the TAA-FE Proxy2 assigns the corresponding sub-keys to the corresponding functional entities respectively, creates the security path between the user and each functional entity, and completes the initial user authentication to fully ensure the security and reliability of the information exchanges in subsequent processes. The sub-keys may also be regarded as the security associations between the user and other functional entities of the second security domain. The other functional entities in the second security domain at least include the NAC-FE and the MMCF, that is, a user's complete authentication is realized, to fully ensure the security and reliability of the information exchanges in subsequent processes.

In the embodiment of the present invention, on detecting that the first AM-FE and the second AM-FE belong to different security domains, the user sends a complete authentication request to an authentication server in the home domain. According to the user information carried by the TAA-FE proxy as well as the domain ID or the domain name of the domain of the second AM-FE, the authentication server generates an authentication key of its attached security domain (a DSRK of the security domain), and sends the authentication key to the TAA-FE proxy of the security domain. The TAA-FE proxy of the security domain interacts with the user and generates the sub-keys to protect the information exchanges between the user and each of other functional entities, thus realizing the complete inter-domain user authentication. On the basis that the security and reliability of a user's inter-domain roaming are fully ensured, the authentication time delay during a user's intra-domain roaming is reduced, and the user is enabled to experience a more smooth network handover.

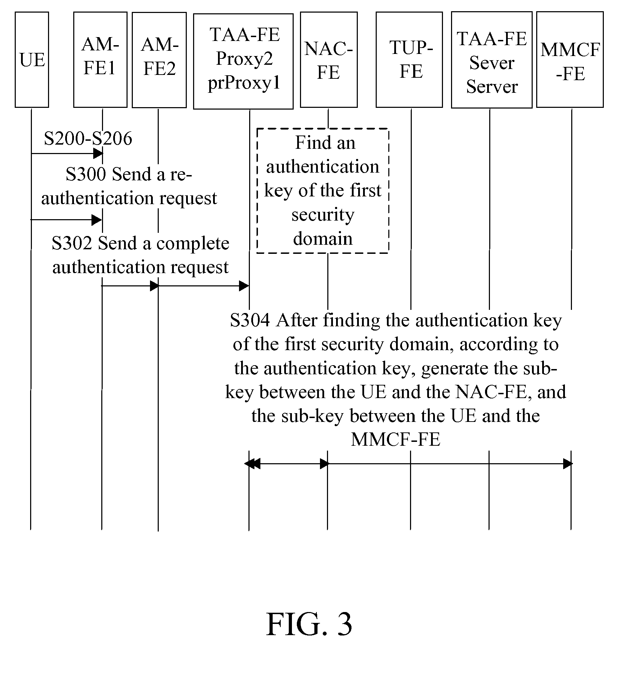

FIG. 1-2 is a schematic diagram of intra-security domain networking, and FIG. 3 is a flow chart of an intra-security domain network authentication method, and the details of the embodiment of the present invention are described as follows.

The FIG. 1-2 shows a schematic diagram of networking when the user 10 is attached from the AM-FE 2002 (AM-FE1) of the first security domain 20 where the user is, to an AM-FE 2004 (AM-FE2) of the first security domain 20. A TAA-FE proxy 2006 (TAA-FE Proxyl) determines an authentication key of the first security domain 20 according to a re-authentication request sent by the user 10, and re-authenticates the user by using the authentication key. The network authentication method is further described in detail in combination with FIG. 3.

In step S300, when a user in the first security domain is attached from the AM-FE1 to the AM-FE2 in the first security domain, the user sends a re-authentication request.

Specifically, before the intra-domain authentication, the user needs to judge whether the attachment points (AM-FE1 and AM-FE2) are in the same security domain. The specific steps for judgment are as follows:
The user initials the layer 2 link scanning to the periphery, finds a peripheral Access Point (AP), and obtains the ID of the peripheral AP or the ID of the Base Station (BS). Then the user, carrying the ID information of an alternative or a target AP, initiates a query request to the present network where the user is, and obtains access domain information of the domain of the alternative or target AP, that is, the information of AM-FE2 in the embodiment of the present invention. According to the judgment result, if the user detects that the AM-FE1 and the AM-FE2 are in the same security domain, the user sends a re-authentication request. The re-authentication request includes one or more random combinations of the ID or the domain name information of the user-attached security domain, and may also include the user negotiated SEQ.

In step S302, the AM-FE1 sends the re-authentication request to the AM-FE2, and the AM-FE2 forwards the re-authentication request to the TAA-FE Proxyl.

In step S304, when receiving the re-authentication request sent by the user, the TAA-FE Proxyl re-authenticates the user according to the authentication key of the first security domain.

When receiving the re-authentication request sent by the user, according to the re-authentication request of the user, the TAA-FE Proxyl directly finds the authentication key negotiated during the previous attachment process done by the user and the TAA-FE Proxyl, where the authentication key is the authentication key of the domain of the AM-FE1. According to the authentication key, the TAA-FE Proxyl negotiates with the functional entities (the NAC-FE and the MMCF), generates the corresponding sub-keys, and assigns the sub-keys to the corresponding functional entities. Therefore, through the TAA-FE Proxyl, the sub-keys between the user and each functional entity are generated, and the re-authentication of the user's attachment from the AM-FE1 in the first security domain to the AM-FE2 in the first security domain is completed. In this way, the security and reliability of the information exchanges in subsequent processes are guaranteed.

The authentication key of the first security domain is generated and sent by an authentication server to the TAA-FE Proxyl during the completion of the complete authentication when a user accesses the security domain for the first time. The TAA-FE Proxyl stores the authentication key of the first security domain, and when the user roams from the AM-FE1 to the AM-FE2 in the same domain, the TAA-FE Proxyl directly queries and obtains the authentication key of the security domain of the AM-FE1, and derives other sub-keys, such as a transport sub-key between the user and the network, an interaction sub-key between the user and the NAC-FE, and an interaction sub-key between the user and the MMCF.

In the embodiment of the present invention, the TAA-FE Proxyl performs a user intra-domain authentication according to the authentication key (DSRK) of the domain where the user locates, such that the user can be authenticated through mobility service after passing the intra-domain authentication for once. Therefore, the time delay of the re-authentication of a user moving within a domain is reduced and the user is enabled to experience a more smooth network handover on the basis that the security and reliability of a user's moving in the domain are fully ensured.

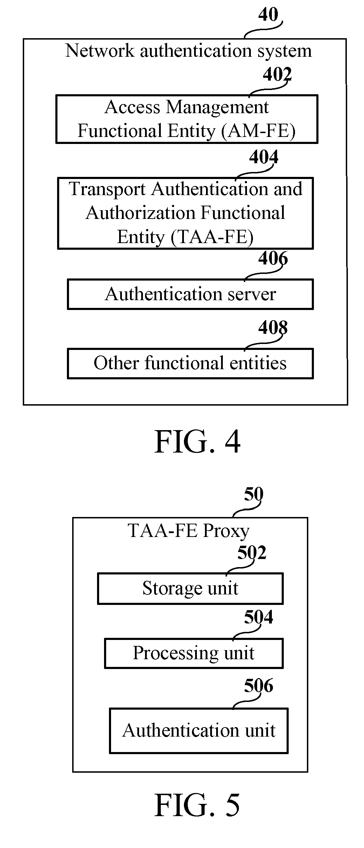

Referring to FIG. 4, a schematic diagram of the structure of a network authentication system is shown.

A network authentication system 40 includes an AM-FE 402 and a TAA-FE proxy 404.

The AM-FE 402 is configured to exchange information with the TAA-FE proxy 404, and send a user authentication request to the TAA-FE proxy 404. Specifically, the AM-FE 402 supports pre-authentication of user network access. The pre-authentication is the user re-authentication and the user complete authentication mentioned in the embodiment of the present invention.

The TAA-FE proxy 404 is configured to forward the user authentication request, and obtain an authentication key of the user-attached security domain; according to the authentication key of the user-attached security domain, generate sub-keys (such as a transport sub-key between the user and the network, an interaction sub-key between the user and the NAC-FE, and an interaction sub-key between the user and the MMCF) for the user to interact with each network entity and authenticate the user. The sub-keys are derived by the TAA-FE proxy of the security domain according to the authentication key of the security domain. The user-attached security domain is the security domain of other AM-FEs being the same as the security domain of the AM-FE and/or the user-attached security domain is the security domain of other AM-FEs being different from the security domain of the AM-FE.

The TAA-FE proxy 404 supports several association-binding states for one user session and from different AM-FEs. Among the association-binding states, one is Active state, and the others are Proactive states. The association-binding states can also be converted according to the mobility handover state.

The system further includes an authentication server 406 and/or other functional entities 408.

The authentication server 406 is configured to receive a user authentication request, and send a response message to the TAA-FE 404. The response message includes one or more contents of the user-attachment authentication result and the authentication key of the security domain of the user-attached AM-FE. The authentication key is generated according to the ID and/or the domain name of the security domain, as well as the user-attachment root key information.

Sub-keys derived based on the authentication key exist between the other functional entities 408 as well as between the other functional entities 408 and a user. Specifically, the other functional entities 408 include one or more functional entities of the NAC-FE, the TUP-FE, and the MMCF. The NAC-FE configures the IP address and the access parameters. The TUP-FE stores user mobility-related configuration information and user-subscribed configuration files, such as the maximum access bandwidth allowed and supported in the different access technologies, the network handover strategies, and the mobility location manager address. The MMCF updates the user address binding. The other functional entities 408 can also include a transport location management functional entity, to support several association-binding states of one user session, convert states according to the mobility handover states, provide the location information (such as the AP information or the BS information) of the target or alternative AP as location information to resource admission and control functions.

Referring to FIG. 5, a schematic diagram of the structure of a TAA-FE proxy device according to an embodiment of the present invention is shown, and the TAA-FE proxy device includes a storage unit 502, a processing unit 504, and an authentication unit 506.

The storage unit 502 is configured to store an authentication key of the security domain of the first AM-FE. The authentication key is generated by an authentication server (TAA-Server), according user-attachment root key information generated after the user passes the authentication.

The processing unit 504 is configured to derive keys for the information exchanges between other AM-FEs of the security domain and a user according to the authentication key stored by the storage unit, and send the derived keys to the authentication unit.

The authentication unit 506 is configured to authenticate the user by using the derived key sent by the processing unit.

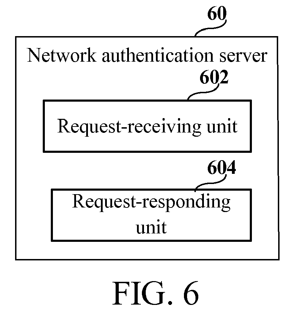

Referring to FIG. 6, a schematic diagram of a structure of a network authentication server according to the embodiment of the present invention is shown.

A network authentication server 60 includes a request-receiving unit 602, configured to receive a user authentication request; and a request-responding unit 604, configured to respond to the user authentication request, and send a response message to a TAA-FE proxy. The response message includes a user-attachment authentication result and a domain authentication key of a security domain of a user-attached AM-FE. The authentication key of a security domain is derived according to the information such as the user-attachment root authentication key information, as well as the ID and the domain name of the security domain.

In view of the above, the embodiment of the invention provides a method, a device, a system and a server for network authentication. By using the method, device, system, and server, the following problems in the prior art are solved: packets of user services are lost and even services are temporarily interrupted because of long time consumption and poor security during intra-domain and inter-domain handovers of the user. Therefore, the rapid and safe authentication of the user's intra-domain or inter-domain roaming is achieved, the time delay of re-authentication during the remaining of the user is reduced, the security and reliability of user authentication are improved, and thus seamless and more smooth network handovers are ensured.

The above descriptions are merely exemplary embodiments of the present invention, but not intended to limit the scope of the present invention. Any modifications, variations or replacement that can be easily derived by those skilled in the art should fall within the scope of the present invention. Therefore, the protection scope of the present invention is subject to the appended claims.

## Claims

1. A method for network authentication, wherein when a user is attached from a first Access Management Functional Entity, AM-FE, to a second AM-FE, the method comprises:
receiving a user authentication request forwarded by the second AM-FE;
obtaining an authentication key of a security domain of the second AM-FE according to the user authentication request;
authenticating the user by using the authentication key of the security domain of the second AM-FE.

2. The method for network authentication according to claim 1, wherein the first AM-FE and the second AM-FE belong to different security domains, and the obtaining the authentication key of the security domain of the second AM-FE comprises:
generating the authentication key of the security domain of the second AM-FE according to an identifier, ID, and/or domain name information of the security domain of the second AM-FE; and/or
sending the ID and/or the domain name information of the security domain of the second AM-FE to an authentication server, and receiving the authentication key of the security domain of the second AM-FE returned by the authentication server.

3. The method for network authentication according to claim 1, wherein the first AM-FE and the second AM-FE belong to the same security domain, and the obtaining the authentication key of the security domain of the second AM-FE comprises:
obtaining an authentication key of the security domain of the first AM-FE, and using the obtained authentication key of the security domain of the first AM-FE as the authentication key of the security domain of the second AM-FE.

4. The method for network authentication according to claim 1, further comprising:
negotiating with the user according to the authentication key, and generating sub-keys between the user and other functional entities, wherein the other functional entities comprise one or more of the following functional entities: a Network Address Configuration Functional Entity, NAC-FE, a Transport User Profile Functional Entity, TUP-FE, and a Mobility Management Control Functions, MMCF.

5. A system for network authentication, comprising an Access Management Functional Entity, AM-FE, and a Transport Authentication and Authorization Functional Entity, TAA-FE, proxy, wherein
the AM-FE is configured to exchange information with the TAA-FE, and send a user authentication request to the TAA-FE proxy; and
the TAA-FE proxy is configured to obtain an authentication key of a user-attached security domain according to the user authentication request, and authenticate the user by using an authentication key of the user-attached security domain.

6. The system for network authentication according to claim 5, wherein the user-attached security domain is a security domain of another AM-FE, and the security domain of the another AM-FE is the same as and/or different from that of the AM-FE.

7. The system for network authentication according to claim 5, further comprising:
an authentication server, configured to receive the user authentication request, and send a response message to the TAA-FE proxy according to the user authentication request, wherein the response message comprises an authentication result of user attachment and an authentication key of a security domain of the user-attached AM-FE.

8. The system for network authentication according claim 5, 6, or 7, wherein the authentication key of the security domain is determined according to an identifier (ID) and/or domain name information of the security domain as well as user attachment root key information.

9. The system for network authentication according to claim 5, further comprising other functional entities, wherein sub-keys based on the authentication key exist between the other functional entities and the user, and the other functional entities comprise one or more of the following functional entities: a Network Address Configuration Functional Entity, NAC-FE, a Transport User Profile Functional Entity (TUP-FE), and a Mobility Management Control Functions, MMCF; and
the sub-keys are derived by the TAA-FE proxy of the security domain according to the authentication key of the security domain.

10. A Transport Authentication and Authorization Functional Entity, TAA-FE, proxy device, comprising:
a storage unit, configured to store an authentication key of a security domain of an Access Management Functional Entity, AM-FE;
a processing unit, configured to derive a key for information exchanges between other AM-FEs of the security domain and a user according to the authentication key stored by the storage unit, and send the derived key to an authentication unit;
an authentication unit, configured to authenticate the user by using the derived key sent by the processing unit.

11. A server for network authentication, comprising:
a request-receiving unit, configured to receive a user authentication request;
a request-responding unit, configured to respond to the user authentication request, and send a response message to a Transport Authentication and Authorization Functional Entity, TAA-FE, proxy, wherein the response message comprises an authentication result of user attachment and an authentication key of a security domain of a user-attached Access Management Functional Entity, AM-FE, and the authentication key of the security domain is derived from user-attachment root key information as well as an identifier, ID, and domain name information of the security domain.
